# DEMANDE DE BREVET EUROPEEN

(11) **EP 3 032 467 A1**
(43) Date de publication de la demande: **15.06.2016**
(21) Numéro de dépôt: 14306984.7
(22) Date de dépôt: 09.12.2014
(51) Int. Cl.: G06K 19/077, B26D 3/08, B26F 3/00

(54) **Procédé et dispositif de fabrication de carte à puce, et carte à puce obtenue par ce procédé**

(71) Demandeur: GEMALTO SA, 92190 Meudon (FR)
(72) Inventeur: Froger, Alexis, 92190 Meudon (FR); Roussel, François, 92190 Meudon (FR); Tsoi, Chi Tung, 92190 Meudon (FR)
(74) Mandataire: Cassagne, Philippe M.J.

(57) **Abrégé**

La carte à puce selon l'invention comporte un corps de carte (3) d'un premier format englobant un corps de carte (4) d'un deuxième format plus petit et d'épaisseur moindre que le corps de carte de premier format. Pour réaliser cette carte à puce, on effectue, par usinage sur une face frontale d'un corps de carte de plus grand format, une réduction d'épaisseur d'une zone (102) correspondant au corps de la carte de plus petit format, puis on découpe par poinçonnage le corps de carte (4) de plus petit format ayant l'épaisseur ainsi réduite, et on réinsère immédiatement ledit corps de carte découpé dans le logement créé par la découpe, jusqu'à faire affleurer la surface usinée (103) du corps de carte de plus petit format avec la surface frontale (101) du corps de carte de plus grand format.

Application notamment à la fabrication de carte à puce multiformats, comportant une carte de format 4FF.

## Description

La présente invention concerne un nouveau procédé de fabrication de cartes à puce, en particulier destinées à une utilisation dans des téléphones portables, ainsi qu'une carte à puce obtenue par ce procédé.

Les cartes à puces concernées par l'invention sont en particulier des modules d'identification abonnés, dites cartes SIM. Les cartes SIM sont destinées à être incorporées au sein de téléphones portables ou autres dispositifs de communication similaires. Les cartes SIM existent en plusieurs formats normalisés définis par des facteurs de forme 2FF, 3FF ou 4FF UICC (de l'anglais Universal Integrated Circuit Card).

La miniaturisation et l'augmentation des fonctionnalités des téléphones portables ont conduit à ce que le format des cartes SIM soit de plus en plus petit. Ainsi, on est passé du facteur de forme 2FF (25 x 15 mm) au 3FF (15 x 12 mm) puis au 4FF encore plus petit (12,3 x 8,80 mm), encore appelé Nano SIM.

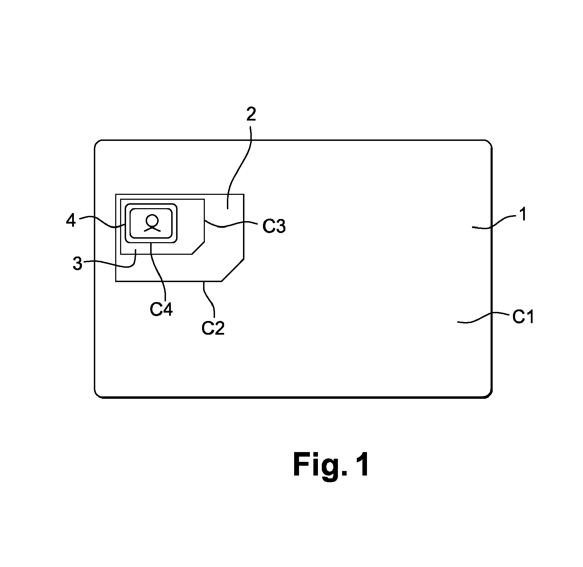

Typiquement, une carte SIM comporte, d'une part, un corps de carte, couramment réalisé par découpe dans une feuille de matière plastique ABS ou PVC, ou par moulage par injection, et, d'autre part, une puce à circuit intégré, fixée sur ce corps de carte. Le corps de carte, se présente sensiblement sous la forme d'un parallélépipède rectangle de faible épaisseur. Généralement, pour la fabrication et la commercialisation des formats de carte 2FF, 3FF et 4FF, le corps de carte de plus petit format est englobé à l'intérieur d'un pourtour correspondant à un format plus grand, en général le format immédiatement supérieur. Ainsi, typiquement, une carte SIM peut être fabriquée et commercialisée sous un format 1 FF, correspondant à un format carte de crédit, dont le corps englobe le corps d'une carte mini-SIM de format 2FF, lequel peut englober le corps d'une carte micro-SIM de format 3FF, etc. à la manière de la carte représentée figure 1, appelée alors carte multiformats. La puce est bien évidemment fixée sur la carte de plus petite dimension, dans un logement réalisé en creux dans l'épaisseur de la carte.

Pour utiliser la carte SIM, en tenant compte du format requis par l'appareil où la carte doit être insérée, l'utilisateur désolidarise la carte au format requis du corps de carte de dimension supérieure. Pour permettre cette désolidarisation de manière la plus aisée possible, le pourtour de chaque format est généralement marqué par une ligne de prédécoupe, qui constitue un affaiblissement de la matière du corps de carte, apte à faciliter la séparation entre la carte de format désirée et le corps de carte de format supérieur, tout en assurant cependant un maintien suffisant entre lesdits corps de carte jusqu'à la séparation volontaire effectuée par l'utilisateur.

Une première manière connue de former les lignes de prédécoupe est de former une rainure traversant sur toute son épaisseur le corps de carte d'un plus grand format et délimitant le pourtour de la carte de format inférieur. On laisse subsister des bretelles de liaison assurant le maintien du corps de carte de petit format par rapport au corps de carte de dimension supérieure jusqu'à séparation de la carte de plus petit format pour son utilisation.

Un procédé classique de réalisation de ces lignes de prédécoupe est le procédé par moulage, dans lequel la carte est moulée par injection et la cavité destinée au logement de la puce, ainsi que les lignes de prédécoupe avec les bretelles de liaison et les lignes de rupture de ces bretelles, sont obtenues lors du moulage.

Il est également connu de réaliser les lignes de prédécoupe par poinçonnage. Selon cette dernière technique, on utilise des outils comportant des lames tranchantes de forme correspondante à la forme du pourtour de la carte désirée, et on fait pénétrer ces lames dans le matériau de la carte, préalablement préparée par moulage sous forme d'une plaque de matière plastique ayant l'épaisseur finale de la carte. Lors de ce poinçonnage, on laisse toutefois subsister, au moins dans certaines zones de la ligne de prédécoupe, une épaisseur de matière suffisante pour assurer le maintien de la plus petite carte dans le corps de carte de dimension supérieure, mais cette épaisseur de matière subsistante est suffisamment faible pour permettre une rupture de la matière dans les dites zones lors de la désolidarisation volontaire de la carte. Ce procédé permet d'obtenir une ligne de prédécoupe et des lignes de rupture beaucoup plus fines que le procédé par moulage. De plus, grâce à cette finesse des lignes de prédécoupe, il devient possible de replacer une carte SIM dans son logement après l'en avoir détachée en brisant les lignes de rupture, un maintien suffisant restant acquis par le seul effet du coincement de la carte dans son logement. Ce procédé est notamment utilisé pour réaliser les lignes de prédécoupe des plus petits formats dans des cartes multiformats.

Un problème se pose toutefois pour la réalisation de cartes multiformats comportant une carte de petit format présentant une épaisseur moindre que les cartes de format supérieur. En particulier, l'épaisseur normalisée (selon spécifications ETSI) d'une carte 4FF est de 650 µ +/- 50µ, alors que l'épaisseur des cartes de format supérieur 3FF ou 2FF est de 680µ mini à 840µ maxi. Il ne peut donc être fabriqué des cartes multiformats de ce type par un poinçonnage comme indiqué ci-dessus, du fait de ces différences d'épaisseur nominales entres les différents formats.

Une solution alors peut être de fabriquer séparément la carte de plus petit format à partir d'une feuille d'épaisseur 0,76 mm par exemple, puis de l'insérer dans un logement ménagé à cet effet dans une carte de format supérieur et d'épaisseur plus grande. Mais cela conduit à un processus de fabrication compliqué et un mauvais maintien de la carte de petit format dans la carte de format supérieur.

La présente invention a pour but de résoudre les problèmes évoqués ci-dessus, et vise en particulier à permettre la fabrication de cartes multiformats incorporant une ou des cartes ayant une épaisseur inférieure à celle de la carte de plus grand format. Elle vise en particulier à proposer un procédé de fabrication de telles cartes par des techniques de type connu, telles que usinage et poinçonnage. Elle vise aussi à proposer un procédé de fabrication économique, permettant de réduire les temps et les coûts de fabrication.

Elle vise encore à éviter les bavures pouvant subsister à la périphérie d'une carte après séparation de celle-ci d'un corps de carte de dimension supérieure.

Elle vise également à limiter les efforts nécessaire pour séparer une carte plus petite de la carte plus grande dans laquelle elle est enchâssée, et ainsi réduire les risques de détérioration de la puce lors de cette séparation de la carte. Elle vise encore à permettre et à faciliter la remise en place d'une carte de plus petit format dans la carte de plus grand format, après qu'elle ait été séparée de cette dernière.

Avec ces objectifs en vue, l'invention a pour objet un procédé de fabrication d'une carte à puce multiformats comportant un corps de carte d'un premier format englobant un corps de carte d'un deuxième format plus petit et d'épaisseur moindre que le corps de carte de premier format.

Selon l'invention, le procédé est caractérisé en ce que, sur une face frontale d'un corps de carte de plus grand format, on effectue par usinage une réduction d'épaisseur d'une zone correspondant au corps de la carte de plus petit format, puis on découpe par poinçonnage le corps de carte de plus petit format ayant l'épaisseur ainsi réduite, et on réinsère immédiatement ledit corps de carte découpé dans le logement créé par la découpe, jusqu'à faire affleurer la surface usinée du corps de carte de plus petit format avec la surface frontale du corps de carte de plus grand format.

Plus particulièrement, lors d'une première étape d'usinage, on usine la zone correspondant à la carte de plus petit format, par un outil d'usinage, pour lui donner l'épaisseur réduite désirée, puis, lors d'une deuxième étape, on place de part et d'autre de la dite zone un poinçon et un contre-poinçon enserrant entre eux ladite zone de corps de carte d'épaisseur réduite, on découpe le flan correspondant à ladite zone par un déplacement simultané du poinçon et du contre-poinçon pour séparer ledit flan du corps de carte de plus grande dimension et, par un déplacement inverse du poinçon et du contre-poinçon enserrant le flan découpé, on réinsère ledit flan dans le logement formé dans le corps de carte de plus grand format lors de la découpe, jusqu'à faire affleurer la surface du flan précédemment usinée avec la face frontale du corps de carte de plus grand format.

La face usinée est préférentiellement la face comportant également le logement de la puce, et ledit logement de la puce peut être préférentiellement réalisé par usinage simultanément lors de l'usinage destiné à réduire l'épaisseur de la zone correspondant à la carte de plus petit format. On peut ainsi par une seule étape d'usinage réaliser à la fois le logement de la puce et la réduction d'épaisseur du corps de carte de plus petit format. De plus, le procédé selon l'invention permet alors de ramener la face de la carte de plus petit format qui portera ultérieurement les zones de contact électrique, directement coplanaire avec la face frontale de la carte multiformats. Ainsi, sans nécessiter aucune opération complémentaire ultérieure, il sera assuré une parfaite coplanarité de l'ensemble de la surface active la carte multiformats, permettant son utilisation comme carte de format plus grand, sans risque des problèmes qui pourraient résulter d'un décrochement entre les surfaces de la carte de plus petit format et celle de plus grand format qui l'entoure, du côté portant les contacts électriques.

Par ailleurs, le procédé selon l'invention permet aussi d'assurer que la face arrière du corps de carte dans la zone de la carte de plus petite dimension ne soit pas endommagé, comme il pourrait l'être en cas d'opération de réduction d'épaisseur par usinage effectuée sur cette face arrière, permettant ainsi d'utiliser cette face arrière pour une personnalisation graphique de meilleure qualité.

Egalement, grâce à la découpe par poinçonnage assurant une séparation complète de la carte de plus petit format, l'invention permet aussi d'éviter les risques d'arrachement de matière ou autres bavures, lors d'une séparation ultérieure de la carte pour son utilisation, qui peuvent survenir lorsque une carte d plus petit format est liée à la carte de plus grand format qui l'englobe, par des bretelles ou lignes de liaison à rompre, comme cela est pratiqué dans l'art antérieur. On évite ainsi ces bavures qui sont préjudiciables à la facilité d'insertion ultérieure de la carte dans l'appareil qui doit la recevoir. Egalement, du fait qu'il n'y ait pas besoin de rompre ces zones de liaison matérielles pour séparer la carte de plus petit format de la carte de plus grand format, on réduit l'effort nécessaire à cette séparation et on réduit ainsi le risque de détérioration de la puce placée sur la carte. Egalement, la carte de plus petit format étant réinsérée après découpe dans le logement formé par cette découpe, et y étant ensuite maintenue par le seul coincement en résultant, il est non seulement plus aisé de séparer les cartes, comme indiqué précédemment, mais aussi possible de replacer la carte de plus petit format dans ce logement après avoir été utilisée.

Aussi, la discontinuité de la surface d'une carte de plus grande dimension, constituée par la présence des lignes de rupture du corps d'une carte de format inférieur, peut créer des problèmes lors de l'insertion de la carte plus grande dans un dispositif, par accrochage ou blocage des contacts de ce dispositif dans les irrégularités de surface formées par les dites lignes de rupture. Le présent procédé, en assurant la continuité de surface entre la face usinée et la face frontale de la carte de dimensions supérieures, permet d'éviter ces problèmes d'accrochage.

L'invention a aussi pour objet une carte à puce multiformats, obtenue par le procédé mentionné précédemment, comportant un corps de carte d'un premier format englobant un corps de carte d'un deuxième format plus petit et d'épaisseur moindre que le corps de carte de premier format. La carte selon l'invention est caractérisée en ce que le corps de carte de plus petit format a une surface usinée coplanaire à la face frontale du corps de carte de plus grand format. Selon une disposition particulière, le corps de carte de plus petit format comporte un logement pour une puce réalisé par usinage du même côté que la surface usinée.

D'autres caractéristiques et avantages apparaîtront dans la description qui va être faite d'une carte conforme à l'invention, ainsi que du procédé de fabrication de cette carte.

On se reportera aux dessins annexés dans lesquels :
- la figure 1 est une vue générale d'une carte multiformats conforme à l'invention,
- les figures 2 et 3 illustrent de manière schématique les phases successives du procédé conforme à l'invention,
- la figure 4 est une vue partielle en coupe du corps de carte obtenu par le procédé selon l'invention.

La carte représentée figure 1 est une carte à puce multiformats comportant un premier corps de carte 1 de plus grandes dimensions, par exemple au format carte de crédit 1 FF, délimité par sa périphérie c1, et incorporant une carte SIM avec un corps de carte 2 de format 2FF ou mini-SIM, délimité par une ligne de prédécoupe c2. Ce corps de carte de format 2FF incorpore à son tour un corps de carte 3 de format 3FF ou micro-SIM, délimité par une ligne de prédécoupe c3, lequel incorpore à son tour un corps de carte 4 de format 4FF ou nano-SIM, délimité par une ligne de prédécoupe c4.

Le corps de carte 4 de plus petit format porte le module électronique 9 placé dans un logement 41 en creux formé dans ce dernier corps de carte.

Par la suite, on considérera que les explications données concernent la réalisation d'un corps de carte 4 de format 4FF dans un corps de carte de format supérieur 3FF, mais l'invention peut bien sûr s'appliquer à n'importe quelle carte englobé dans une carte de format plus grand, par exemple une carte 4FF dans une carte 2FF, ou dans une carte multiformats 2FF/3FF, etc.

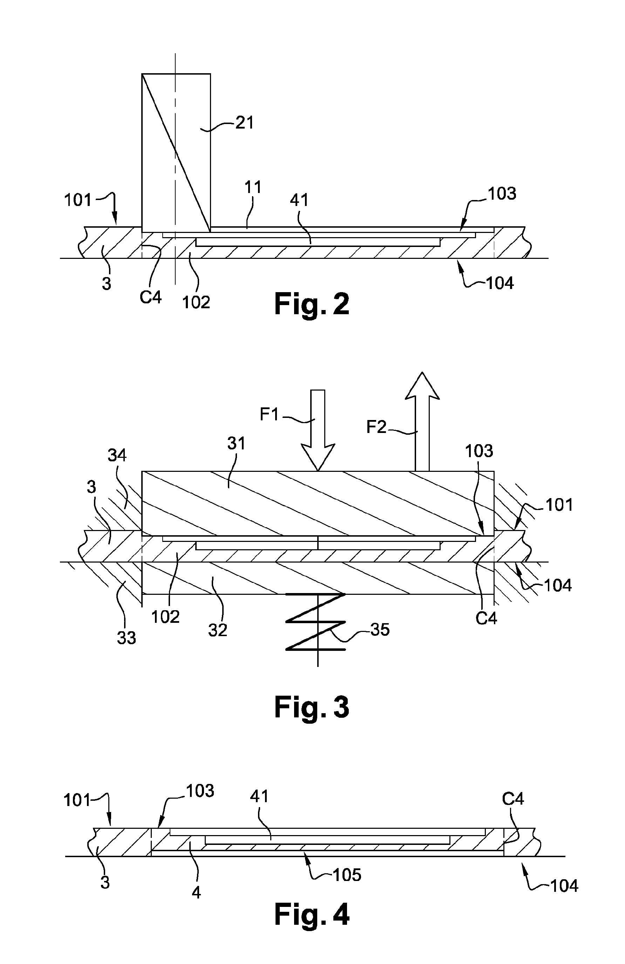

Sur les figures 2 et 3 on n'a donc représenté que les opérations relatives à la préparation d'un corps de carte de plus petit format 4, typiquement de format 4FF, englobé dans un corps de carte de plus grand format 3, de format 2FF ou 3FF, à partir d'une feuille de matière plastique d'épaisseur égale à celle d'une carte dudit plus grand format format 2FF ou 3FF, typiquement 0,76 mm.

Comme illustré figure 2, on usine sur une face avant 101 dudit corps de carte 3, par une fraise 21, ou outil similaire, une cavité 11 sur une zone 102 dont les dimensions et formes correspondent à celles du corps de carte 4 de petit format, délimitée par le contour c4. Cet usinage est réalisé de manière à laisser subsister entre la face usinée 103 et la face arrière 104 une épaisseur de matière égale à celle souhaitée pour le corps de carte 4, typiquement 0,67 mm. Préalablement, le logement 41 de la puce est réalisé, également par usinage, sur la même face avant 101 que la cavité 11, de sorte que l'usinage de la cavité 11 peut en fait être effectué pratiquement uniquement sur les bords du corps de carte 4, autour du logement 41. Alternativement, l'usinage du logement 41 pourrait aussi être effectué simultanément, ou ultérieurement, à celui réalisé pour réduire l'épaisseur du corps de carte 4.

Après avoir réalisé l'usinage de réduction d'épaisseur du corps de carte 4, on place la dite feuille 10 entre un poinçon 31 et un contre-poinçon 32 d'une presse à découper, la feuille 10 étant soutenue par une matrice 33 et appliquée sur cette matrice par un serre flan 34. Le contour du poinçon 31 et du contre-poinçon 32 ainsi que celui de la matrice et du serre-flan sont identiques au contour c4 du corps de carte 4. La feuille 10 est positionnée de manière que la zone 102 usinée précédemment soit exactement située face au poinçon 31, de sorte que celui-ci puisse pénétrer dans le logement 11, pour enserrer la dite zone 102 entre poinçon et contre-poinçon, comme représenté figure 3. On déplace alors simultanément le poinçon 31 et le contre-poinçon 32, selon la flèche F1, d'une distance au moins égale à l'épaisseur de la feuille 10, entraînant la zone 102 et provoquant ainsi, par coopération du poinçon 31 avec la matrice 33, la découpe complète de cette zone 102, pour former le corps de carte 4. L'ensemble poinçon 31 et contre-poinçon 32, enserrant alors le corps de carte 4, est ensuite déplacé immédiatement en sens inverse, selon la flèche F2, par un vérin non représenté, ou sous l'effet d'un ressort de rappel 35, réinsérant le corps de carte 4 dans le corps de carte 3 jusqu'à ce que la face usinée 103 du corps de carte 4 se trouve exactement au niveau de la face avant 101 du corps de carte 3, comme cela est représenté figure 4.

On notera que, ce faisant, le corps de carte 4 se retrouve encastré dans le corps de carte 3, avec suffisamment de frottement au niveau du chant du corps de carte, sur l'ensemble du pourtour c4, pour maintenir fermement le corps de carte 4 avec sa surface usinée 103 affleurant avec la face avant 101 du corps de carte 3 pendant les autres opérations ultérieure de fabrication et de finition de la carte, et aussi jusqu'à ce que la carte de format 4FF soit extraite volontairement de la carte de format 3FF pour son utilisation finale.

On notera aussi que, du fait que la face usinée 103 est amenée en fin d'opération de poinçonnage au niveau de la face avant 101, la face arrière 105 du corps de carte 4 se trouve alors en retrait par rapport à la face arrière 103 de la carte 3. Cette face arrière 105 n'ayant pas été usinée, son état de surface garde la même qualité que celui de la surface 104 de la feuille plastique d'origine, et est donc particulièrement adapté pour une impression graphique.

Bien que, dans l'exemple précédemment décrit on ait mentionné la réalisation d'une carte de format 4FF à partir d'une carte de format supérieur 3FF, ce qui vient d'être décrit est transposable aux autres formats ou autres combinaisons de formats de carte.

## Revendications

1. Procédé de fabrication d'une carte à puce multiformats comportant un corps de carte (3) d'un premier format englobant un corps de carte (4) d'un deuxième format plus petit et d'épaisseur moindre que le corps de carte de premier format,
**caractérisé en ce que**, sur une face frontale (101) d'un corps de carte de plus grand format (3), on effectue par usinage une réduction d'épaisseur d'une zone (102) correspondant au corps de la carte de plus petit format, puis on découpe par poinçonnage le corps de carte de plus petit format ayant l'épaisseur ainsi réduite, et on réinsère immédiatement ledit corps de carte (4) découpé dans le logement créé par la découpe, jusqu'à faire affleurer la surface usinée (103) du corps de carte de plus petit format avec la surface frontale (101) du corps de carte de plus grand format.

2. Procédé selon la revendication 1, **caractérisé en ce qu'**on usine la zone (102) correspondant à la carte de plus petit format, par un outil d'usinage (21), pour lui donner l'épaisseur réduite désirée, puis, lors d'une deuxième étape, on place de part et d'autre de la dite zone un poinçon (31) et un contre-poinçon (32) enserrant entre eux ladite zone (102) de corps de carte d'épaisseur réduite, on découpe le flan correspondant à ladite zone par un déplacement simultané du poinçon et du contre-poinçon pour séparer ledit flan du corps de carte de plus grande dimension et pour former le corps de carte (4) de plus petit format, et, par un déplacement inverse du poinçon et du contre-poinçon enserrant le corps de carte (4) découpé, on réinsère ledit corps de carte (4) de plus petit format dans le logement formé dans le corps de carte de plus grand format par la découpe, jusqu'à faire affleurer la surface (103) précédemment usinée du corps de carte (4) de plus petit format avec la face frontale (101) du corps de carte de plus grand format (3).

3. Procédé selon la revendication 1 ou 2, **caractérisé en ce que** la face usinée (103) est la face comportant également le logement (41) de la puce, et ledit logement de la puce est réalisé par usinage préalablement à, ou simultanément lors de, l'usinage assurant la réduction d'épaisseur de la zone correspondant à la carte de plus petit format.

4. Procédé selon l'une quelconque des revendications précédentes, **caractérisé en ce que** le corps de carte (4) de plus petit format est un corps de carte de format 4FF.

5. Procédé selon la revendication 4, **caractérisé en ce que** le corps de carte de plus grand format est un corps de carte (3) de format 3FF, ou 2FF, ou un corps de carte multiformats 2FF/3FF.

6. Carte à puce multiformats, obtenue par le procédé selon l'une quelconque des revendications précédentes, comportant un corps de carte (3) d'un premier format englobant un corps de carte (4) d'un deuxième format plus petit et d'épaisseur moindre que le corps de carte de premier format, **caractérisée en ce que** le corps de carte de plus petit format a une surface usinée (103) coplanaire à la face frontale (101) du corps de carte de plus grand format.

7. Carte à puce selon la revendication 6, **caractérisée en ce que** le corps de carte (4) de plus petit format comporte un logement (41) pour une puce (9) réalisé par usinage du même côté que ladite surface usinée (103).

8. Carte à puce selon la revendication 6 ou 7, **caractérisée en ce que** le corps de carte (4) de plus petit format est un corps de carte de format 4FF et le corps de carte (3) de plus grand format est un corps de carte de format 3FF, ou 2FF, ou un corps de carte multiformats 2FF/3FF.
